(19) Europäisches Patentamt
European Patent Office
Office européen des brevets

(11) **EP 2 544 874 B1**

(12) **EUROPEAN PATENT SPECIFICATION**

(45) Date of publication and mention of the grant of the patent:
**19.11.2014 Bulletin 2014/47**

(21) Application number: **11707858.4**

(22) Date of filing: **11.03.2011**

(51) Int Cl.:
*B29C 49/06* (2006.01)    *B29B 11/14* (2006.01)
*B65D 1/02* (2006.01)    *C08G 63/183* (2006.01)
*C08L 67/02* (2006.01)    *B32B 27/36* (2006.01)

(86) International application number:
**PCT/EP2011/053679**

(87) International publication number:
**WO 2011/110660 (15.09.2011 Gazette 2011/37)**

(54) **METHOD FOR PRODUCING PLASTIC CONTAINERS BY STRETCH BLOW MOLDING, PREFORM, CONTAINER AND USE OF SUCH A CONTAINER**

VERFAHREN ZUR HERSTELLUNG VON KUNSTSTOFFBEHÄLTERN DURCH STRECKBLASFORMUNG, VORFORM, BEHÄLTER UND VERWENDUNG EINES SOLCHEN BEHÄLTERS

PROCÉDÉ DE FABRICATION DE CONTENANTS EN PLASTIQUE PAR MOULAGE PAR ÉTIRAGE-SOUFFLAGE PRÉFORME, CONTENANT ET UTILISATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2010 PCT/IB2010/001116**

(43) Date of publication of application:
**16.01.2013 Bulletin 2013/03**

(73) Proprietor: **Sa Des Eaux Minerales D'evian Saeme**
**74500 Evian-les-Bains (FR)**

(72) Inventors:
• **POULAT, Françoise**
**F-74140 Sciez (FR)**
• **BESSON, Jean-Paul**
**F-74360 Abondance (FR)**
• **BOUTIN, Emilie**
**74500 Evian-les-Bains (FR)**

(74) Representative: **Cabinet Plasseraud**
**52, rue de la Victoire**
**75440 Paris Cedex 09 (FR)**

(56) References cited:
**EP-A1- 1 657 276**    **EP-A1- 1 997 603**
**WO-A1-02/070606**    **FR-A1- 2 898 293**
**US-A1- 2007 088 133**    **US-A1- 2010 044 266**
**US-A1- 2010 044 928**    **US-B1- 6 444 299**

**Description**

FIELD OF THE INVENTION

The present invention relates generally to improvements made in the field of the production of containers comprising a narrow opening and a long body, such as bottles or similar, by means of stretch blow molding preforms containing PET. The invention may be applied in particular in injection stretch-blow molding method (ISBM).

BACKGROUND OF THE INVENTION

It is known to produce containers, and in particular bottles or similar, by means stretch blow molding from preforms made from various materials. The technology ISBM is well known and comprises at first injecting the material by:

- optionally drying (if necessary) the material to be used before any fusion,
- plasticizing the material,
- injecting the plasticized material in the mold, which may consist of a core and one counter mold that form a molding cavity,
- cooling the material shaped into a preform,
- stripping with evacuation of the preform.

Then a blowing is performed, the blowing including following steps: reheating of preforms, stretching-preblowing and blowing.

The material which is used most frequently nowadays is polyethylene terephthalate (PET) due to certain very advantageous properties of bottles made from this material (namely their good mechanical resistance, allowing them to contain carbonated drinks, the facility to be filled with a hot liquid, the good transparency of the PET which does not adversely affect the appearance of the liquid which they contain, a relatively good barrier effect to oxygen, etc.).

While Extrusion blow molding (EBM) machines are much cheaper, ISBM equipment is often preferred to obtain plastic containers such as PET bottles from preforms because the PET containers made by the ISBM method are stronger, lighter, have better clarity, and are leak proof (injection molded neck) than anything else possible by the EBM method. Some containers can only be made by ISBM, soft drinks bottles for example cannot be molded by EBM. The average thickness of the container side wall may be typically inferior to $300 \mu m$ when produced by means of stretch-blow molding.

Nevertheless, the weight of the PET bottles cannot be easily reduced since the PET preforms have to be injected properly and without any deformation and stretched so as to obtain uniform shapes. Problems caused by the high injection pressures with preforms having thin walls are mentioned in Patent application FR2898293-A1 of the Applicant.

With the conventional ISBM equipments, attempts made to highly reduce the thickness of PET containers comprising a narrow opening and a long body have resulted in failure (in particular problems during molding due to high injection pressure, non-uniform shapes from one container to the other and apparition of "short shots" with a lack of material in area(s) at the opposite of the material injection point). Indeed, following research undertaken in this field, the applicant has been able to establish that, to obtain satisfactory containers comprising a narrow opening and a body of a standard capacity of 500mL, with mass production and with production equipment operating at a high rate, it was necessary to have an average thickness of the preform body not inferior to 2mm. The phrase "container comprising a narrow opening and a long body", in the remainder of the present description, is understood to be any container of which the opening has a smaller section than that of its body: this may be a bottle or a similar container such as a can, flask or similar, which has a narrow neck or mouth.

There are already some solutions to provide to the consumers containers with less thick walls and thus containing less material through mixing of PET with aromatic polyester. The patent EP1436203 concerns containers obtained by an ISBM method where PET is mixed with an amorphous aromatic polyester such as PEN (polyethylene naphtalate). However, this method is not adapted for containers such as bottles with a conventional shape, including a rigid bottom or similar base and one or more side walls allowing the bottle to be easy manipulated and transported.

Molded articles comprising PET and PTT are known from US2010/044266 A1 and a process for obtaining ISBM articles by stretching a preform including PET and PTT is disclosed in US 2010/044928 A1. Such articles are produced from a thermoplastic composition of 30-99 weight % PET and 1-70 weight % PTT.

SUMMARY OF THE INVENTION

The present invention is aimed at alleviating the disadvantages of the known ISBM methods and its purpose is to supply a preform which allow producing a container comprising a narrow opening and a long body which, for the same volume, requires less plastic than a standard container obtained by an ISBM method.

To this end, embodiments of the present invention provide a method according to claim 1.

The body is made of a material, typically a plastic composition, comprising 50-95 wt% of PET and 5-50 wt% of PTT. The material can essentially comprise 50-95 wt% of PET and 5-50 wt% of PTT. The material can essentially consist of 50-95 wt% of PET and 5-50 wt% of PTT. In one embodiment the material consists of 50-95 wt% of PET and 5-50 wt% of PTT.

Surprisingly, the use of PTT does not affect the molding workability by stretch blow-molding of the preform and the biaxial stretching rate is highly increased. This was unexpected as PTT was not used in ISBM methods because of its high tendency to crystallize (a crystallized polymer is rigid and can neither be molded, nor stretched by a blowing gas). By working with a plastic material, for example with PET, by stretch blow molding, the above mentioned stretching ratio is limited, while keeping a good integrity of the container.

Advantageously with this method, the operating rate of the ISBM production equipment is not reduced (i.e. with the same rate as for the production of the conventional PET containers). Thanks to the high overall stretching ratio (also called biaxial ratio), a preform having a wall thickness not inferior to 2mm may be used to obtain the container of lower weight.

One further advantage of PTT is that it can be based on renewable resources and thus minimizes the depletion of oil, which is a non-renewable resource.

In the range specified in claim 1 for the ratio wP.eP/SB, the process is surprisingly reliable. Indeed, the average thickness eP of the preform may be advantageously not inferior to 2mm, while the ratio wP/SB may be very low. This offers an advantageous compromise between quality requirements for mass production and reduction of the cost with decrease of the preform weight.

In one embodiment the material essentially comprises 75-95 wt% of PET and 5-25 wt% of PTT. In one embodiment the material essentially consists of 75-95 wt% of PET and 5-25 wt% of PTT. In one embodiment the body consists of 75-95 wt% of PET and 5-25 wt% of PTT.

The preferred amounts mentioned above can be typically in the ranges below:

- 90-95 wt% PET and 5-10% PTT, or
- 85-90 wt% PET and 10-15% PTT, or
- 80-85 wt% PET and 15-20% PTT, or
- 75-80 wt% PET and 20-25% PTT.

The material can comprise a crystallization accelerator or a nucleating agent. In one embodiment the material does not comprise a crystallization accelerator or a nucleating agent.

The material can comprise optional additives such as colouring agents, plasticizers, stabilisation agents, for example antioxidants, anti-static agents, lubricants, processing aids, fire-retardants, charges and fillers. Such additives are known by the one skilled in the art. These additives can be to the mixture the mixture of PET and PET, or to the PET or the PTT, before mixing the PET and the PTT.

The material having the mixture of PET and PTT can be obtained by melting and mixing the PET and the PTT, or compositions comprising the PET and the PTT, for example by melting and mixing plastic chips. In one embodiment the material is formed before production of the preform, by melting, mixing, extruding to obtain a material in the form of chips, flakes, pellets or powder. These are then typically used in the method of the invention, to form the injection molded perform. In one embodiment the material is formed during production of the preform, by separate introduction during the injection molding of the PET and the PTT, or compositions comprising the PET and the PTT, for example in the form of plastic chips.

With the composition as indicated in claim 2 for the preform, an advantageous compromise is obtained for producing bottles or similar containers having mechanical resistance adapted for good formability. In particular, the containers may be shaped as the conventional PET containers with an elongated body and a bottom sufficiently rigid to support weight of the content (typically more than 300mL water), the bottom allowing a vertical storage of the container. This composition of the preform is suitable for producing 250-2000mL containers, while a higher proportion of PTT is more suitable for 3000-5000mL containers with enhanced flexibility (these containers of higher capacity typically have a substantially circular cross-section and optionally an ovoid overall shape).

In various embodiments of the method of the invention, recourse may optionally also be had to one or more of the dispositions recited in the dependent claims 3-6.It is also provided, according to the invention, a preform for implementation of the method for producing containers, the preform being such as defined in claim 7.

A further purpose of the invention is to provide hollow containers of reduced weight, such as bottles, having physical properties adapted for storage of a still liquid beverage, preferably mineral water, the containers being further adapted to be obtained by using an injection stretch blow molding equipment and being sufficiently resistant to allow transport with superposition of the containers. The containers can also be used for storage of non beverage products such as cosmetics and detergents.

To this end, embodiments of the present invention provide a hollow plastic container such as defined in claim 8.

In various embodiments of the container according to the invention, recourse may optionally also be had to one or more of the dispositions recited in the dependent claims 9-12.

With an average thickness between 50 and 120µm, it ensures that high quantity of material is saved in comparison with conventional bottles or similar containers obtained by ISBM). This average thickness may be, for example between 50 and 60 $\mu$m or between 60 and 70 $\mu$m, or between 70 and 80 $\mu$m, or between 80 or 90 $\mu$m, or between 90 and less than 100 $\mu$m, or 100 $\mu$m, or between more than 100 and 110 $\mu$m, or between 110 and 120 $\mu$m.

Other features and advantages of the invention will become apparent to those skilled in the art during the description which will follow, given by way of a nonlimiting example, with reference to the appended drawings.

BRIEF DESCRIPTION OF THE DRAWINGS

Fig. 1 is a schematic representation, in diametric section, of an example of a preform, used by the invention, associated with a schematic representation of an example of a container comprising a narrow opening and a long body, such as a bottle, flask, can or similar, capable of being obtained by means of blow molding or stretch blow molding the preform;
Fig. 2 shows a bottle obtained with a PET/PTT preform in accordance with a first preferred embodiment of the invention;
Fig. 3 shows a bottle obtained with a PET/PTT preform in accordance with a second preferred embodiment of the invention.

DETAILED DESCRIPTION OF EMBODIMENTS

In the various figures, the same references are used to designate identical or similar elements.

Fig.. 1 shows a PET/PTT preform 1 intended for the production of a container 2 comprising a narrow opening 2a and a long body 2b, in this case a bottle, by means of a stretch blow molding process. A preform of this type comprises a neck 3 which is formed by a part present on the preform, which part is not modified during the steps of transforming the preform 1 into a container 2. The neck 3 can be closed by a means of closing off and/or distributing the flowable product contained in the body 2b of the container 2. In the extension of the neck 3, the preform 1 comprises a zone 4 of which the constituent material will form the shoulder 2c of the container 2; in the example illustrated, this zone 4 comprises a substantially cylindrical first part 4a extended by a substantially tapered second part 4b.

This second tapered part 4b is extended by two successive parts 5, 6 respectively forming the body and base of the preform 1 of which the constituent material will be found respectively on the body 2b and on the base 10 of the container 2.

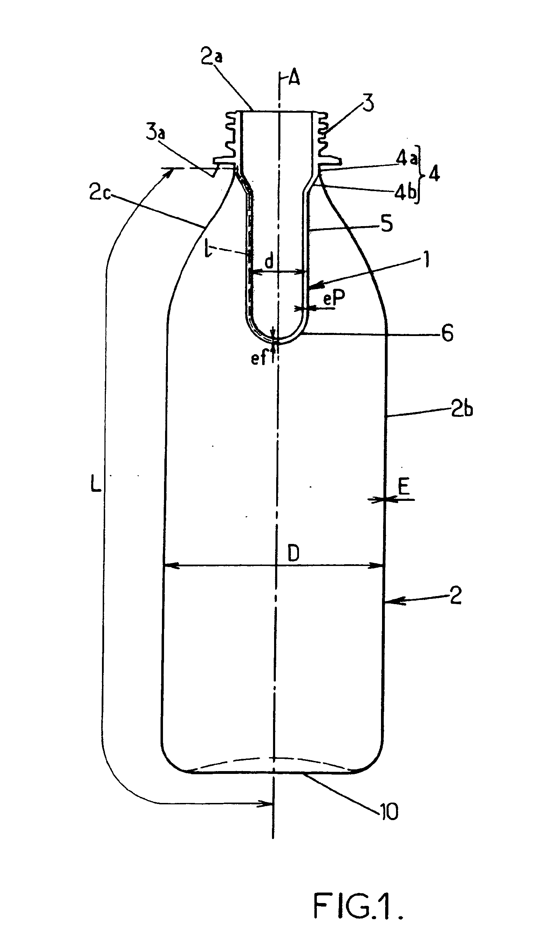

In the non limitative embodiment shown in figure 1, the preform 1 comprises minor weight proportion of PTT and a major proportion of PET and may be conventionally designed so as to be capable of withstanding, during the blow molding or stretch blow molding process, longitudinal stretching at a ratio (i.e. ratio of the developed half length L of the long body 2b of the container 2 to the developed half length 1 of the body 5 of the preform 1) which is between approximately 3.5 and 6 and radial stretching at a ratio (i.e. ratio of the average diameter D of the long body 2b of the container 2 to the average diameter d of the body of the preform 1) which is between approximately 4 and 9.

The developed half length is the dimension of the neutral axis of the wall taken from the bottom 3a (in this case the lower face of the flange) of the neck 3 and the center of the base 6 for the preform 1 (shown by a dotted line in the left half of the preform 1 on Fig. 1) or the center of the base 10 for the container 2. Similarly, the average diameter is the diameter d of the part of the body 5 of the preform 1 or the diameter D of the part of the long body 2b of the container 2 taken on the respective neutral axis.

Advantageously, the production may be performed at a high rate and with high efficiency for a longitudinal stretching ratio of between approximately 3.5 and 4.5 and a radial stretching ratio of between approximately 4.5 and 7. Preferably, so that a sufficiently wide treatment window is formed to satisfy the demands of industrial mass production, it is desirable that the radial stretching ratio is greater than or at least equal to the longitudinal stretching ratio.

In these conditions, in a typical example for implementing the arrangements of the invention, the longitudinal stretching ratio is approximately 4, whilst the radial stretching ratio is approximately 5. More generally, the body 5 of the preform 1 may be subjected to an overall stretching ratio comprised between 16 and 50 with a preform 1 having a body 5 essentially comprising 50-95 wt% of PET and 5-50 wt% of PTT. The body 5 and the neck 3 are preferably made as a single piece. This makes it possible to avoid any join or weld which may constitute a region of greater weakness.

To make it possible to ensure a production rate of the same size as that permitted by using PET preforms, it is desirable that the preform 1 made of a mixing of PET and PTT has a body 5 of which the wall has a maximum thickness eP which is less than approximately 3mm, and preferably typically approximately 2.0mm; it is also desirable that it has a base 6 of which the thickness ef is not greater than approximately 3 mm, and preferably no greater than 2.2mm.

In a preferred embodiment, bottles or similar containers 2 are produced by means of stretch blow molding from preforms made from a PET/PTT mixing with a proportion of PTT comprised between 5 and 50 wt%. A blend of polyethylene terephtalate (PET) and polytrimethylene terephtalate (PTT) in this composition range is homogeneously mixed and forms the plasticized material that is injected in the mold, and then cooled after being shaped into a preform in the mold. In this case, the body 5 of the preform 1 and the neck 3 are made of the same material. Those skilled in the art will appreciate that the central axis of the preform 1 defines the longitudinal direction of the container 2 at the time of its manufacture.

The body 5 of the preform 1 is then subjected to an overall stretching ratio comprised between 16 and 50, by using blowing fluid at a pressure comprised between $20*10^5$ and $40*10^5$ Pa, and preferably between $30*10^5$ and $40*10^5$ Pa.

## Experimental results

### EXAMPLE 1

A preform 1 is injection molded by using A PET and PTT. The body 5 and the neck 3 are made as a single piece. The mixing between PET and PTT is made in such a way that the preform 1 has a body 5, here an elongated body 5, including 85 wt% of PET and 15 wt% of PTT.

**Table A1**

| Preform | | | | | |
|---|---|---|---|---|---|
| Weight (preform) | Weight wP (body) | Volume (body) | Average diameter d | Developed half-length 1 | Thickness eP |
| 10 (g) | 7.6 (g) | 5.71 (cm$^3$) | 13.63 (mm) | 59 (mm) | 2.13 (mm) |

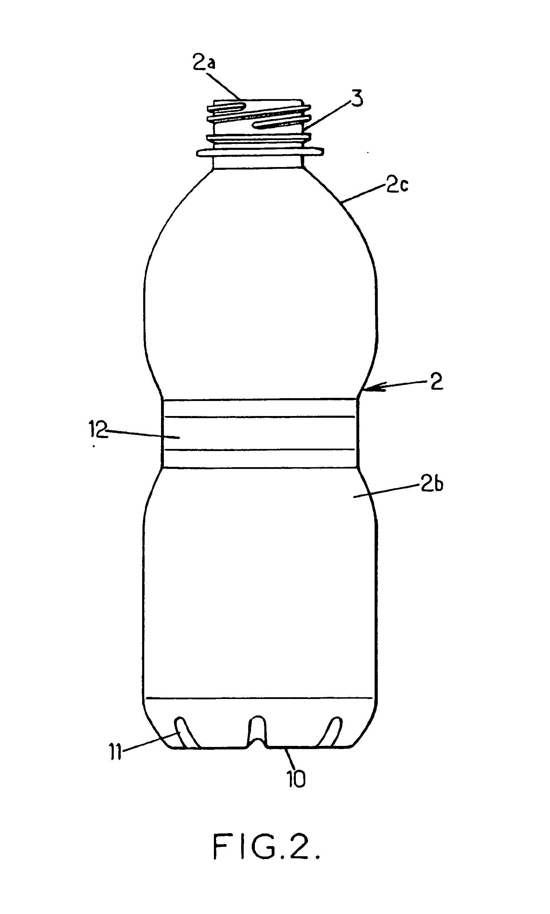

The body 2b of the preform 1 has characteristics as indicated in above table A1. This body 2b is subjected to a stretching during operation of stretch blow molding, so as to obtain a bottle having characteristics as indicated in table B1 and adapted to contain 0.5L mineral water. For example, the general shape of such a bottle corresponds to that of the container 2 shown in figure 2. Features of the 0.5L bottle and stretching ratios are reported in table B1.

**Table B1**

| 0.5L Bottle | | | Stretching ratios | | |
|---|---|---|---|---|---|
| Diameter D | Developed half-length L | Surface area | D/d | L/l | Overall |
| 67 (mm) | 220 (mm) | 396 (cm$^2$) | 4.92 | 3.73 | 18.33 |

The overall stretching ratio is thus greater than 18 in this case. The average thickness E of the side wall of the bottle may be 126 $\mu$m in this non-limitative example.

Tests made with a body 5 of the preform 5 essentially comprising 75-95 wt% of PET and 5-25 wt% of PTT show that the body 5 of the preform 1 can be subjected to an overall stretching ratio comprised between 16 and 25, without any modification in the steps of the ISBM method as compared when using a PET preform, so as to produce a plastic bottle (i.e. a container 2 with a narrow opening 2a and a long body 2b) with good mechanical properties. The base 10 may have a substantial wall thickness, proportionally greater than that of the remainder of the container 2 so as to support the liquid weight without any deformation. With such a composition of the preform 1, the base 10 may be obtained with a particular shape as in the PET conventional containers. With such a minor proportion of PTT, the base 10 may be shaped as shown in Fig. 2 with reinforcing ribs 11. A correct shaping of the base 10, with such reinforcing ribs 11 and an overall concavity facing the outside of the container 2 (as shown in Fig. 1), is the most difficult to implement by the stretch blow molding operation, due to the fact that the substantially greater thickness of material leads to slower stretching and more difficult shaping. Surprisingly, use of a preform 1 comprising 5-25wt%, and preferably 5-20wt% PTT does not affect the correct shaping of the base 10 and formability of the container 2 is good.

Figure 2 also shows that the body 2b may be provided with an intermediate part 12 of reduced cross-section allowing a better handling of the container. Such an intermediate part typically comprises ribs or similar forms to reinforce the side wall of the body 2b, so as to resist to the pressure exerted by the hand of the user.

With a stretching ratio comprised between 16 and 25, the weight of the container 2 may be reduced and the side wall of the long body 2b has an average thickness E inferior to 200-300$\mu$m, for instance less than 150$\mu$m.

## EXAMPLE 2

The body 2b of the preform 1 having geometry characteristics as indicated in a table A1 and having a larger proportion of PTT may be subjected to a higher stretching than according to EXEMPLE 1. The mixing between PET and PTT is made in such a way that the preform 1 has an elongated body 5 that includes 75 wt% of PET and 25 wt% of PTT.

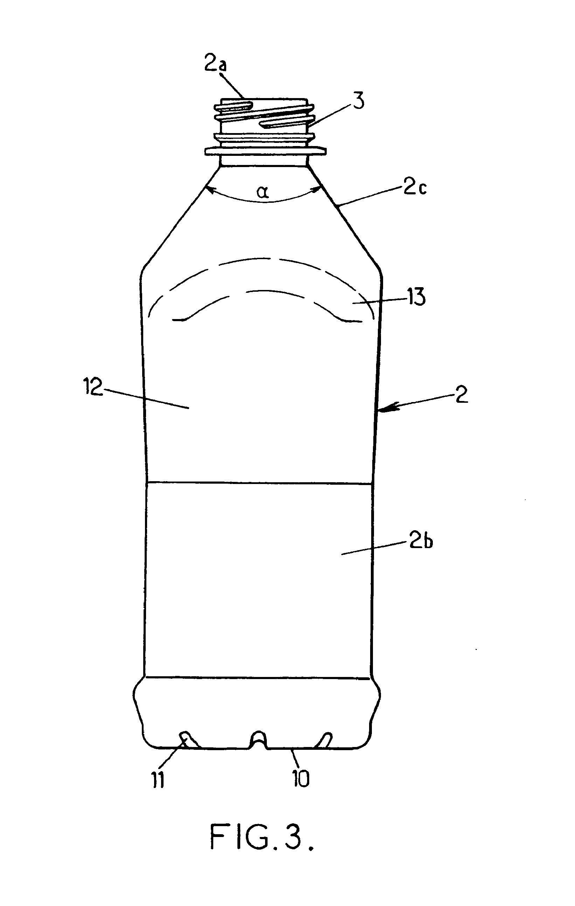

In this case, a bottle adapted to contain 1L mineral water and having characteristics as indicated in table B2 is obtained. For example, the general shape of such a bottle corresponds to that of the container 2 shown in figure 3. The reinforcing ribs 11 may be of smaller size in this case. The shoulder 2c may define a tapered portion with an angle $\alpha$ at the reference cone apex comprised between 50 and 90°. Here, the intermediate part 12 is not of reduced cross-section but some protruding portions 13 may be provided above and/or under the level of this intermediate part 12.

Features of the 1L bottle and stretching ratios are reported in table B2.

### Table B2

| 1L Bottle | | | Stretching ratios | | |
|---|---|---|---|---|---|
| Diameter D | Developed half-length L | Surface area | D/d | L/l | Overall |
| 83 (mm) | 261 (mm) | 590 (cm$^2$) | 6.09 | 4.42 | 26.94 |

The overall stretching ratio is thus greater than 26 in this case. The average thickness E of the side wall of the bottle may be 90$\mu$m in this non-limitative example.

More generally, when using a preform with 50-75wt% PET and 25-50wt% PTT, the overall stretching ratio advantageously increases so as to highly reduce the quantity of material. In this case, the side wall of the long body 2b has an average thickness E inferior to 120$\mu$m. According to a preferred embodiment of the invention, the side wall of the long body 2b has an average thickness E that remains inferior to 200$\mu$m, for instance comprised between 50 and 120-130$\mu$m.

With a proportion of PTT comprised between 25 and 50 wt% and when the overall stretching ratio is comprised between 25 and 50, the material of which the side wall or side walls of the body 2b is or are made is thin and flexible enough for these walls to be able to deform locally, but also rigid enough for the container 2 to be able, under certain conditions, to maintain its initial shape obtained at the time of its manufacture. In particular, the empty container 2 having 25-50wt% PTT does not collapse on itself when empty.

The tests above show that the following formula is satisfied:

$$0.002 \text{ g/cm} \leq wP.eP/SB \leq 0.005 \text{ g/cm}$$

where wP and eP are respectively weight and average thickness of the preform body 5, while SB is inner surface area of the body 2b of the container 2.

The container 2 obtained with a preform 1 essentially comprising 50-95wt% PET and 5-50wt% PTT can be used for 250-5000mL capacity, for instance to contain water or a still liquid beverage, particularly still mineral water or sparkling mineral water. Of course, the containers 2 of the present invention are not in any way limited to flat or sparkling mineral water but can be intended to contain all sorts of flowable products, edible or inedible liquids of greater or lesser fluidity such as, for example, fruit juices, milk-based beverages, etc., and also sauces or condiments (ketchup, mustard, dressing, etc.) or non-food liquids (deionised water, cleaning products, detergents, etc.).

The present invention has been described in connection with the preferred embodiments. These embodiments, however, are merely for example and the invention is not restricted thereto. It will be understood by those skilled in the art that other variations and modifications can easily be made within the scope of the invention as defined by the appended claims, thus it is only intended that the present invention be limited by the following claims.

Any reference sign in the following claims should not be construed as limiting the claim. It will be obvious that the use of the verb "to comprise" and its conjugations does not exclude the presence of any other elements besides those defined in any claim. The word "a" or "an" preceding an element does not exclude the presence of a plurality of such elements.

**Claims**

1. A method for producing plastic containers (2) comprising a narrow opening (2a) and a body (2b) having a base (10) and at least one side wall extending longitudinally between the narrow opening (2a) and the base (10), by stretch-blow molding an injection-molded preform (1), said preform comprising a body, **characterized in that** the body (5) of the preform (1) comprises 50-95 wt% of PET and 5-50 wt% of PTT and said wall of the preform body has a maximum thickness comprised between 1.8mm and 2.4mm, and **in that** the body (5) of the preform is subjected to an overall stretching ratio comprised between 16 and 50, said overall stretching ratio being the product of a longitudinal stretching ratio L/l and a radial stretching ratio D/d, where

   L is the developed half length L of said body (2b) of the container (2);

   1 is the developed half length 1 of the body (5) of the preform (1);

   D is the ratio of the average diameter of said body (2b) of the container (2); and

   d is the average diameter d of the body (5) of the preform (1)

   and **in that** the following formula is satisfied:

$$0.002 \text{ g/cm} \leq wP.eP/SB \leq 0.005 \text{ g/cm}$$

   where wP and eP are respectively weight and average thickness of the preform body (5), while SB is inner surface area of the body (2b) of the container (2).

2. The method according to claim 1, wherein the body (5) of the preform (1) comprises 75-95 wt% of PET and 5-25 wt% of PTT, and in that the body (5) of the preform (1) is subjected to an overall stretching ratio comprised between 16 and 25.

3. The method according to claim 1, wherein the longitudinal stretching ratio is between approximately 3.5 and 6, and preferably between 3.5 and 4.5.

4. The method according to claim 1 or 3, wherein the radial stretching ratio is between approximately 4 and 9, and preferably between 4.5 and 7.

5. The method according to any one of the preceding claims, wherein the preform (1) is obtained by mixing PET and PTT in a plasticized state and injecting the resulting mixture of PET and PTT in a mold.

6. The method according to any one of the preceding claims, wherein the blowing fluid is at a pressure comprised between $20*10^5$ and $40*10^5$ Pa, and preferably between $30*10^5$ and $40*10^5$ Pa.

7. A preform (1) for implementation of the method as claimed in any of claims 1-6, **characterized in that** the preform has a body (5) of which the wall has a maximum thickness (eP) which is comprised between 1.8mm and 2.4mm, said body comprising a mixing of two aromatic polyesters in the proportions 50-95 wt% of PET and 5-50 wt% of PTT.

8. A hollow plastic container (2) comprising a narrow opening (2a) and a body (2b) having a base (10) and at least one side wall extending longitudinally between the narrow opening (2a) and the base (10), obtained by stretch-blow molding an injection-molded preform (1) according to claim 7, **characterized in that** said body (2b) comprises a mixing of two aromatic polyesters in the proportions 50-95 wt% of PET and 5-50 wt% of PTT, the average thickness (E) of said side wall being inferior to 150$\mu$m.

9. The hollow plastic container of claim 8, wherein the average thickness (E) of said side wall is comprised between 50 and 120$\mu$m.

10. The hollow plastic container according to claim 8 or 9, wherein said body (2b) comprises a mixing of two aromatic polyesters in the proportions 75-95 wt% of PET and 5-25 wt% of PTT.

11. The hollow plastic container according to any one of claims 8-10, wherein the inner capacity of said body (2b) is comprised in the range 250-5000 mL.

12. The hollow plastic container according to any one of claims 8-11, wherein said body (2b) is obtained by stretching a preform (1) according to the formula:

$$16 \leq L/l*D/d \leq 50$$

where

> L/l is the ratio of the developed half length L of said body (2b) of the container (2) to the developed half length 1 of the body (5) of the preform (1), and
> D/d is the ratio of the average diameter D of said body (2b) of the container (2) to the average diameter d of the body (5) of the preform (1).

**13.** Use of a hollow plastic container (2) according to any one of the claims 8 to 12 for containing a still liquid beverage, preferably mineral water.


## Patentansprüche

**1.** Verfahren zur Herstellung von Kunststoffbehältern (2), die eine enge Öffnung (2a) und einen Körper (2b) umfassen, der einen Boden (10) und mindestens eine Seitenwand, die sich längs zwischen der engen Öffnung (2a) und dem Boden (10) erstreckt, aufweist, durch Streckblasformen einer spritzgegossenen Vorform (1), wobei die Vorform einen Körper umfasst, **dadurch gekennzeichnet, dass** der Körper (5) der Vorform (1) 50 bis 95 Gew.% PET und 5 bis 50 Gew.% PTT umfasst und die Wand des Vorformkörpers eine Maximaldicke aufweist, die zwischen 1,8 mm und 2,4 mm liegt, und dadurch, dass der Körper (5) der Vorform einem Gesamtstreckverhältnis ausgesetzt ist, das zwischen 16 und 50 liegt, wobei das Gesamtstreckverhältnis das Produkt aus einem Längsstreckverhältnis L/l und einem Radialstreckverhältnis D/d ist, wobei
L die abgewickelte halbe Länge L des Körpers (2b) des Behälters (2) ist;
1 die abgewickelte halbe Länge 1 des Körpers (5) der Vorform (1) ist;
D das Verhältnis des durchschnittlichen Durchmessers des Körpers (2b) des Behälters (2) ist; und
d der durchschnittliche Durchmesser d des Körpers (5) der Vorform (1) ist,
und dadurch, dass die folgende Formel erfüllt ist:

$$0,002 \text{ g/cm} \leq wP \cdot eP/SB \leq 0,005 \text{ g/cm}$$

wobei wP und eP jeweils Gewicht und durchschnittliche Dicke des Vorformkörpers (5) sind, wohingegen SB der innere Oberflächenbereich des Körpers (2b) des Containers (2) ist.

**2.** Verfahren nach Anspruch 1, wobei der Körper (5) der Vorform (1) 75 bis 95 Gew.% PET und 5 bis 25 Gew.% PTT umfasst, und wobei der Körper (5) der Vorform (1) einem Gesamtstreckverhältnis ausgesetzt ist, das zwischen 16 und 25 liegt.

**3.** Verfahren nach Anspruch 1, wobei das Längsstreckverhältnis zwischen etwa 3,5 und 6 und vorzugsweise zwischen 3,5 und 4,5 liegt.

**4.** Verfahren nach Anspruch 1 oder 3, wobei das Radialstreckverhältnis zwischen etwa 4 und 9 und vorzugsweise zwischen 4,5 und 7 liegt.

**5.** Verfahren nach einem der vorhergehenden Ansprüche, wobei die Vorform (1) durch Mischen von PET und PTT in einem plastifizierten Zustand und Einspritzen des resultierenden Gemischs aus PET und PTT in einer Form erhalten wird.

**6.** Verfahren nach einem der vorhergehenden Ansprüche, wobei das Blasfluid auf einem Druck ist, der zwischen $20*10^5$ und $40*10^5$ Pa und vorzugsweise zwischen $30*10^5$ und $40*10^5$ Pa liegt.

**7.** Vorform (1) zur Durchführung des Verfahrens nach einem der Ansprüche 1 bis 6, **dadurch gekennzeichnet, dass** die Vorform einen Körper (5) aufweist, bei dem die Wand eine Maximaldicke (eP) aufweist, die zwischen 1,8 mm und 2,4 mm liegt, wobei der Körper ein Mischen von zwei aromatischen Polyestern in den Anteilen von 50 bis 95 Gew.% PET und 5 bis 50 Gew.% PTT umfasst.

8. Hohler Kunststoffbehälter (2), der eine enge Öffnung (2a) und einen Körper (2b) umfasst, der einen Boden (10) und mindestens eine Seitenwand, die sich längs zwischen der engen Öffnung (2a) und dem Boden (10) erstreckt, aufweist, und durch Streckblasformung einer spritzgegossenen Vorform (1) nach Anspruch 7 erhalten wird, **dadurch gekennzeichnet, dass** der Körper (2b) eine Mischung von zwei aromatischen Polyestern in den Anteilen von 50 bis 95 Gew.% PET und 5 bis 50 Gew.% PTT umfasst, wobei die durchschnittliche Dicke (E) der Seitenwand kleiner als 150 μm ist.

9. Hohler Kunststoffbehälter nach Anspruch 8, wobei die durchschnittliche Dicke (E) der Seitenwand zwischen 50 und 120 μm liegt.

10. Hohler Kunststoffbehälter nach Anspruch 8 oder 9, wobei der Körper (2b) eine Mischung von zwei aromatischen Polyestern in den Anteilen von 75 bis 95 Gew-% PET und 5 bis 25 Gew.% PTT umfasst.

11. Hohler Kunststoffbehälter nach einem der Ansprüche 8 bis 10, wobei das innere Fassungsvermögen des Körpers (2b) im Bereich von 250 bis 5000 ml liegt.

12. Hohler Kunststoffbehälter nach einem der Ansprüche 8 bis 11, wobei der Körper (2b) durch Strecken einer Vorform (1) nach folgender Formel erhalten wird:

$$16 \leq L/l*D/d \leq 50$$

wobei

L/l das Verhältnis der abgewickelten halben Länge L des Körpers (2b) des Containers (2) zu der abgewickelten halben Länge 1 des Körpers (5) der Vorform (1) ist, und
D/d das Verhältnis des durchschnittlichen Durchmessers D des Körpers (2b) des Containers (2) zum durchschnittlichen Durchmesser d des Körpers (5) der Vorform (1) ist.

13. Verwendung eines hohlen Kunststoffbehälters (2) nach einem der Ansprüche 8 bis 12 zum Fassen eines stillen flüssigen Getränks, vorzugsweise Mineralwasser.

## Revendications

1. Procédé pour produire des contenants en plastique (2) comprenant une ouverture étroite (2a) et un corps (2b) comportant une base (10) et au moins une paroi latérale s'étendant longitudinalement entre l'ouverture étroite (2a) et la base (10), en moulant par soufflage-étirage une préforme moulée par injection (1), ladite préforme comprenant un corps, **caractérisé en ce que** le corps (5) de la préforme (1) comprend 50 à 95 % en poids de PET et 5 à 50 % en poids de PTT et ladite paroi du corps de préforme possède une épaisseur maximum comprise entre 1,8 mm et 2,4 mm, et **en ce que** le corps (5) de la préforme est soumis à un rapport d'étirage total compris entre 16 et 50, ledit rapport d'étirage total étant le produit d'un rapport d'étirage longitudinal L/l et d'un rapport d'étirage radial D/d, où L est la demi-longueur développée L dudit corps (2b) du contenant (2) ;
1 est la demi-longueur développée 1 du corps (5) de la préforme (1) ;
D est le rapport du diamètre moyen dudit corps (2b) du contenant (2) ; et
d est le diamètre moyen d du corps (5) de la préforme (1) et **en ce que** la formule suivante est satisfaite :

$$0,002 \text{ g/cm} \leq wP.eP/SB \leq 0,005 \text{ g/cm}$$

où wP et eP sont respectivement le poids et l'épaisseur moyenne du corps de préforme (5), alors que SB est une superficie intérieure du corps (2b) du contenant (2).

2. Procédé selon la revendication 1, dans lequel le corps (5) de la préforme (1) comprend 75 à 95 % en poids de PET et 5 à 25 % en poids de PTT, et en ce que le corps (5) de la préforme (1) est soumis à un rapport d'étirage total compris entre 16 et 25.

3. Procédé selon la revendication 1, dans lequel le rapport d'étirage longitudinal est entre approximativement 3,5 et 6, et de préférence entre 3,5 et 4,5.

4. Procédé selon la revendication 1 ou 3, dans lequel le rapport d'étirage radial est entre approximativement 4 et 9, et de préférence entre 4,5 et 7.

5. Procédé selon une quelconque des revendications précédentes, dans lequel la préforme (1) est obtenue en mélangeant du PET et du PTT dans un état plastifié et en injectant le mélange résultant de PET et de PTT dans un moule.

6. Procédé selon une quelconque des revendications précédentes, dans lequel le fluide de soufflage est à une pression comprise entre $20*10^5$ et $40*10^5$ Pa, et de préférence entre $30*10^5$ et $40*10^5$ Pa.

7. Préforme (1) pour la réalisation du procédé selon une quelconque des revendications 1 à 6, **caractérisée en ce que** la préforme comporte un corps (5) dont la paroi possède une épaisseur maximum (eP) qui est comprise entre 1,8 mm et 2,4 mm, ledit corps comprenant un mélange de deux polyesters aromatiques dans les proportions 50 à 95 % en poids de PET et 5 à 50 % en poids de PTT.

8. Contenant en plastique creux (2) comprenant une ouverture étroite (2a) et un corps (2b) comportant une base (10) et au moins une paroi latérale s'étendant longitudinalement entre l'ouverture étroite (2a) et la base (10), obtenu en moulant par soufflage-étirage une préforme moulée par injection (1) selon la revendication 7, **caractérisé en ce que** ledit corps (2b) comprend un mélange de deux polyesters aromatiques dans les proportions 50 à 95 % en poids de PET et 5 à 50 % en poids de PTT, l'épaisseur moyenne (E) de ladite paroi latérale étant inférieure à 150 $\mu$m.

9. Contenant en plastique creux selon la revendication 8, dans lequel l'épaisseur moyenne (E) de ladite paroi latérale est comprise entre 50 et 120 $\mu$m.

10. Contenant en plastique creux selon la revendication 8 ou 9, dans lequel ledit corps (2b) comprend un mélange de deux polyesters aromatiques dans les proportions 75 à 95 % en poids de PET et 5 à 25 % en poids de PTT.

11. Contenant en plastique creux selon une quelconque des revendications 8 à 10, dans lequel la capacité intérieure dudit corps 10 (2b) est comprise dans la plage 250 à 5000 mL.

12. Contenant en plastique creux selon une quelconque des revendications 8 à 11, dans lequel ledit corps (2b) est obtenu en étirant une préforme (1) selon la formule :

$$16 \leq L/l * D/d \leq 50$$

où

L/l est le rapport de la demi-longueur développée L dudit corps (2b) du contenant (2) à la demi-longueur développée 1 du corps (5) de la préforme (1), et
D/d est le rapport du diamètre moyen D dudit corps (2b) du contenant (2) au diamètre moyen d du corps (5) de la préforme (1).

13. Utilisation d'un contenant en plastique creux (2) selon une quelconque des revendications 8 à 12 pour contenir une boisson liquide non gazeuse, de préférence de l'eau minérale.

EP 2 544 874 B1

FIG.1.

11

FIG.2.

FIG.3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2898293 A1
- EP 1436203 A
- US 2010044266 A1
- US 2010044928 A1